# EUROPEAN PATENT APPLICATION

(11) **EP 3 747 779 A1**
(43) Date of publication of application: **09.12.2020**
(21) Application number: 19179057.5
(22) Date of filing: 07.06.2019
(51) Int. Cl.: B64F 1/20, F21V 15/00

(54) **AIRFIELD LIGHT AND MOUNTING SLEEVE FOR AN AIRFIELD LIGHT**

(71) Applicant: Induperm A/S, 4800 Nykøbing Falster (DK)
(72) Inventor: Hildebrant, Alexander, 59558 Lippstadt (DE)
(74) Representative: Lohr, Jöstingmeier & Partner

(57) **Abstract**

A mounting sleeve 40, 80 for mounting a post mount airfield light 10 to a base 12, having a through hole extending along its longitudinal axis with a first opening being defined by a first end face of the mounting sleeve and second end being defined by a second end face of the mounting sleeve, and comprising a first coupling 42, 82 for being mounted to an airfield light base 12 or an upper end of a mounting post 14 of an airfield light 10 and a second coupling 46, 86 for supporting a lower end of the mounting post 14 of the airfield light 10 or a lower end of an airfield lighting fixture 16 of the airfield light 10, enables a repair at reduced costs and increases safety of maintenance staff if the airfield light has been hit by an aircraft if the mounting sleeve 40, 80 has an intermediate portion 44, 84 between the first coupling 42, 82 and the second coupling 46, 86, wherein the intermediate portion 44, 84 has a frangible area configured to break prior to the other portions of the mounting sleeve 40, 80 thereby defining a predetermined weak link which breaks in case the airfield light is hit by an aircraft to thereby disconnect the first coupling 42, 82 and the second coupling 82.

## Description

### Field of the invention

The invention relates to an airfield light for lighting runways, taxiways or approaches. The airfield light comprises a base for being mounted to the ground, a mounting post being supported via a mounting sleeve by the base, a lighting fixture being supported by the mounting post and a cable for connecting the lighting fixture to a power supply and/or a control station.

### Description of the related art

Some airfield lights are flush mount lights, i.e. they are flush with a taxi way or a runway. These flush lights are referred to as *inset lights.* Aircraft can roll over these inset lights without damage to the aircraft or the light. Some airfield lights, however, require to be mounted at an elevated position. Accordingly, these airfield lights are generally referred to as elevated airfield lights, or briefly elevated lights. In most cases the elevated lights comprise a tubular pole that enables to mount a lighting fixture at a defined distance above the surface. This tubular pole serves as a mounting post and can for example have the shape of an upwardly projecting column. Accordingly, this type of airfield lights is referred to herein as *post lights* or *pole lights.* Other terms for the pole or post include mast, pylon, rod or the like. These terms are synonyms herein and herein, we will focus only on these post lights.

Occasionally taxiing aircraft or aircraft coming of a runway hit these post lights. Similarly, maintenance vehicles like plow trucks, mowers and the like may hit these post lights. To avoid severe structural damage to the aircraft and as well to other components of the post lights it has been suggested to weaken the post slightly above a basis supporting the post, to thereby provide for a frangible area that cracks prior to causing severe damage to the aircraft or the lighting fixture which typically is mounted at the distal end of the mounting post.

In particular, US 6,984 053 B suggests a taxiway or runway edge light having a mounting base with a sleeve. An upper portion of the sleeve receives a proximal i.e. lower end of an upright hollow post. The upper and thus distal end of the hollow post supports a lighting fixture for signaling the left or right edge of a runway or of taxiway. A cable for powering the lighting fixture extends through the sleeve inside the hollow tube and provides an electrical connection of the lighting fixture with a light control unit. The cable has a plug-socket connector being positioned in a lower portion of the sleeve. The portion of the post extending above the sleeve has frangible area providing a weak link, i.e. a predetermined breaking ring which cracks in case the edge light is hit by an aircraft.

### Summary of the invention

An object of the invention is to reduce repair costs of airfield lights that have been hit by an aircraft or any other vehicle. Further, secondary damages, e.g. due to broken power lines, are to be avoided as well.

Solutions of the problem are described in the independent claims. The dependent claims relate to further improvements of the invention.

The invention is based on the observation that in case of a collision of an aircraft with the prior art edge lights the damage is not limited to the fractured mounting post. It has been observed that the cable brakes as well, which causes additional costs and its replacement requires particularly skilled staff, as in many legislations mechanical repairs can be done by almost any person, whereas repair of electrical installations is limited to licensed staff, being more expensive.

Repair costs are significantly reduced by providing a mounting sleeve with a frangible area. Thus, in case of an accident, there is no need to replace a large mounting post, but instead only the cheaper coupling sleeve requires a replacement. The mounting sleeve has a longitudinal axis, a through hole extending along the longitudinal axis with a first opening being defined by a first end face of the mounting sleeve and second end being defined by a second end face of the mounting sleeve. In an example, the mounting sleeve may comprise a first coupling configured to be mounted to the airfield light base. The first coupling may be at the first end of the mounting sleeve. Herein the first end refers to the lower end, if mounted in an upright position to the base. The mounting sleeve may further comprise a second coupling being configured to support a lower end of the mounting post.

Alternatively or in addition, the mounting sleeve or a second mounting sleeve, respectively may have a first coupling configured for mounting the mounting sleeve to the distal end of a mounting post of an aircraft light and a second coupling configured to couple to a lighting fixture of an aircraft light. Thus, as an example, the mounting post of an airfield light may be in between of two mounting sleeves each being coupled via a coupling to an end of the mounting post.

In any case, the mounting sleeve has an intermediate portion between the first coupling and the second coupling, wherein the intermediate portion has a frangible area. The frangible area is configured to break prior to the other portions of the mounting sleeve and preferably as well prior to the base and the mounting post of an airfield light. The frangible area thus defines a predetermined weak link which breaks in case the airfield light is hit by an aircraft to thereby disconnect the first coupling and the second coupling.

The first and/or second coupling(s) are/is preferably releasable half couplings and provide for a mechanical connection between the mounting sleeve and the corresponding counterpart of the coupling, which can be the base, the mounting post or the lighting fixture. For example, a (half) coupling may comprise a thread configured to be screwed into a corresponding thread of the counterpart. The counterpart thus provides the complementary half coupling. For simplicity, herein we use the term coupling for the half-couplings of the coupling sleeve, unless explicitly referred to the complementary half-couplings. The invention is not limited to screw couplings. Other types of couplings, e.g. clamp couplings, bayonet couplings and the like can be used as well. The preferred couplings are releasable couplings as these simplify replacement of a broken mounting sleeve.

The mounting sleeve has a peripheral surface. For example, the peripheral surface may have a ring groove to thereby provide an area of reduced a wall thickness, which provides the weak link. The ring groove is preferably in between of the first and second coupling and may thus define the intermediate portion. The intermediate portion may overlap with the first or second coupling, as long as breaking or cracking of the intermediate portion separates the first and second couplings and thus in use, the base from the mounting post and/or the mounting post from the lighting fixture , respectively, which are mechanically connected to one of the couplings.

Preferably, the mounting sleeve has a first lower section with a first inner diameter and a second section with a second inner diameter. The second section is preferably adjacent to the first section and the second inner diameter is greater than the first inner diameter, to thereby provide a surface with a radial component configured to provide an abutment for restricting an axial movement of a first portion of an electrical plug-socket connector towards an end face of the mounting sleeve. For example, the surface may be a ring surface extending radially. Thus, there may be a jump of the inner diameter forming a step in the inner surface of the mounting sleeve. Alternatively, there may be steady transition (as a function of axial extension) from the first inner diameter to the second inner diameter. In this example the first and the second section are spaced by a transition section of non zero length. More generally, the transition section may have a length *l*, with *l≥0 cm* (the step example above corresponds to *l=0 cm*). The transition from the first to the second inner diameter provides an abutment, i.e. a thrust bearing, for supporting a first portion of a plug-socket connector in place when the mounting sleeve breaks. The lower end of the cable is thus not stressed and a cable break in the lower portion of the airfield light, e.g. in the base or a able tunnel connecting the base with a control station does not occur. In the worst case, the cable breaks between the plug-socket connector and the lighting fixture, but this portion of the cable is easily accessible and can be replaced involving only minor expenses.

Optionally, the second portion of the plug-socket connector is attached to the second coupling, thus in case the mounting sleeve breaks, the plug-socket connector opens.

Non-interlocking plug-socket connectors are preferred. Non-interlocking plug-socket connectors means in this context that there are no interlocking means that require to be manually released prior to disconnecting the plug and the socket. For example, the plug and the socket of the plug-socket connector may maintain their relative position by friction. This friction can be overcome, if a force exerted to the plug and/or the socket in a direction causing a separation of the plug from the socket (or vice versa) exceeds a threshold. In another example, a flexible interlocking means of the plug (or of the socket) may engage into a recess of the socket (or of the plug) and is configured to disengage if a force separating the plug from the socket exceed a threshold. Of course, the two example methods of interlocking the plug and the socket during normal operation of the airfield light can be combined. Essential is only that the coupled plug-socket connector is configured to release, i.e. to open, if a force separating the plug and the socket exceeds as predetermined threshold. Thus, breaking the mounting sleeve results in a disconnection of the cable and thus as well of the lighting fixture without any cable break. In practice, the threshold can be selected to be below the force being required to rupture the cable being connected by the plug-socket connector. Thus, if the mounting sleeve breaks, the cable connection being provided by the plug-socket connector is interrupted. When replacing the mounting sleeve, it is sufficient to reconnect the plug and the socket of the plug-socket connector. The force being required to disconnect the plug-socket connector can be transferred to the plug and the socket via the cable and/or the mounting sleeve, e.g. via the above explained abutment being provided by a change of the inner diameter of the mounting sleeve. In an example, there is a first abutment at a first side of the frangible area and/or a second abutment at the second, i.e. opposite side the frangible area.

In short, it is not required to fully attach the first and/or second portions to the respective couplings, it is sufficient if the mounting sleeve provides an abutment for restricting an axial movement of the first portion and/or second portion of the plug-socket connector towards the second opening and/or first opening, respectively.

Thus, preferably, the second coupling provides an axial abutment configured to restrict an axial movement of a second portion of the electrical plug-socket connector towards the first end.

Another aspect of the invention is a holder for axially positioning a first portion or a second portion of a plug-socket connector inside the mounting sleeve. The holder can be integrally formed with a first or a second portion of a plug-socket connector. Below, we consider the first or a second portions to be distinct from a corresponding holder, but as indicated a unitary piece providing both functions is possible as well and may have advantages in manufacturing.

The holder has a ring or a ring segment configured for at least partially encircling a longitudinal axis of the plug-socket connector and to transfer an axial force to the first or second portion of the plug-socket connector. The axial force points away from an end face of the respective first or second portion being configured to mate with a complementary second or first portion of the plug-socket connector. In a preferred embodiment, the ring or ring segment may transfer axial forces in both directions. Attached to the ring is at least one first leg. The first leg has a land configured to engage into a recess of the inner surface of the mounting sleeve or behind an end face of the mounting sleeve, to thereby block an axial movement of the first portion of the plug-socket connector at least in the direction of its complementary second portion.

As explained above, preferably, the ring or ring segment, respectively, is further configured to transfer an axial force pointing towards the end face configured for mating with the second portion. This can be provided by at least one second leg which is attached to the ring or ring segment, respectively. The optional second leg may have a detent for engaging behind the surface with a radial component of the inner surface of the mounting sleeve, being explained above.

Repairing an airfield light that has been hit by an aircraft or another machine (e.g. a snow plow) is enhanced by a repair kit comprising least one mounting sleeve as explained at least one holder for attaching a first or a second portion of a plug-socket connector to a respective coupling of the mounting sleeve. The kit may further comprise a replacement plug-socket connector or parts thereof.

An airfield light according to the invention comprises at least a base for being mounted to the ground, a mounting post being supported by the base, a lighting fixture being supported by the mounting post and a cable for connecting the lighting fixture to a power supply. The term 'ground' should be considered as pars pro toto for any support of the base. Often the bases are mounted to covers of openings of cable tunnels, which are considered to be a part of the ground. In some installations the base may be mounted to a fundament or the like.

The airfield light further comprises at least first mounting sleeve wherein the first coupling of the first mounting sleeve is coupled to the base and the second coupling of the mounting sleeve is coupled to the mounting post. Alternatively, or in addition, the airfield light may comprise at least a second mounting sleeve, wherein the first coupling of the second mounting sleeve is coupled to the mounting post and the second coupling is coupled to the lighting fixture.

As explained above, the cable preferably has a first and/or a second plug-socket connector. For example, the first plug-socket connector has a first and a second portion configured to mate to thereby electrically connect two ends of the cable extending through the mounting post and at least the first mounting sleeves. The first plug-socket connector is axially positioned inside the first mounting sleeve. At least one holder and the first and/or second portion of the first plug-socket connector is axially positioned inside the first mounting sleeve, wherein at least one holder my position the plug-socket connector at the axial position of the weak link, preferably as explained above in more detail.

Similarly, the second plug-socket connector may optionally have first and a second portion configured to mate to thereby connect two ends of the cable extending through the mounting post and at least the second mounting sleeve. The plug-second socket connector is axially positioned inside the second mounting sleeve. The holder as explained above and the first and/or second portion of the second plug-socket connector is axially positioned inside the second mounting sleeve. The holder positions the second plug-socket connector preferably at the axial position of the weak link.

To position the plug-socket connector at the axial position of the weak link intends to express that the axial position of the weak link is in the interval being defined by the axial positions over which the closed plug-socket connector extends and preferably in the interval of axial positions where the plug portion of the plug-socket connector and the socket portion of the plug-socket connector axially overlap.

The airfield light may further comprise a first holder attaching the first portion of the respective plug-socket connector to the first coupling of the coupling sleeve and/or a second holder which attaches the second portion of the respective plug-socket connector to the second coupling of the coupling sleeve. The holder(s) maintains the portions of the plug-socket connectors in place relative to the first and second couplings, respectively, if the weak link breaks. Thus, the plug-socket connector is disconnected without being pulled by the cable. In consequence, there is no mechanical load exercised on the cable that could harm or even break the cable. Accordingly, there is no danger of uninsulated free ends of a broken cable still being under voltage. By attaching the first and second portions of the plug-socket connector to the respective first and second couplings, the plug-socket connector becomes the (mechanical) weak link of the cable. If the weak link of the cable breaks there is no thread of electricity and the cable can be repaired by simple plugging the plug into the socket again.

In particularly preferred example is at least one of the holders pivotable supported in the mounting sleeve, to thereby pivotable support the respective plug-socket connector, respectively. This pivotable movement contributes to avoiding cable breaks in case the weak link breaks, as the longitudinal axis of the connector may slightly align with the two separated couplings, thereby avoiding the plug portion to be jammed in the socket portion.

Only to avoid any misunderstanding, herein the term plug-socket connector refers to an electrical connector having a first portion and second portion, which are typically each connected to free ends of cables and when mated provide for an electrical connection of the wire leads of the cables. Disconnecting the first and second portions interrupts the electrical connection. One of the first and second portions is a plug and the other is a socket configured to receive the plug, herein preferably by an axial movement, only.

The term coupling in contrast herein refers to a mechanical connection, only. Thus, by use of *"connector"* or *"coupling",* it is herein distinguished between provision of an electrical (*"connector"*) or a purely mechanical (*"coupling"*) connection, respectively. It is noted that the electrical connector as well provides a mechanical connection of the otherwise free ends of the cable, but the coupling does not electrically connect the wires of the cable. However, the cable may be mechanically attached to the isolation of the cable.

The coupling and the plug-socket may connector interact, e.g. via the holder(s) as explained above. In a preferred example, at least one holder positions the plug socket connector inside the mounting sleeve, wherein the axial position of the plug-socket connector matches with axial position of the weak link. Preferably the axial position of the weak link in the interval of axial positions being defined by the portion of the plug-socket connector, where the plug portion engages with the socket portion. This particular relative position enhances separation of the plug portion from the socket portion of the plug-socket connector in case the mounting sleeve breaks. A similar effect can still be obtained if the above interval is increased, but the boarder is considered to be defined by the extending the interval to the length of the plug-socket connector.

### Description of Drawings

In the following the invention will be described by way of example, without limitation of the general inventive concept, on examples of embodiment with reference to the drawings.
Figure 1 shows an airfield light
Figure 2 shows cross sectional view of a first detail of the airfield light
Figure 3 shows an exploded view of the first detail of the airfield light
Figure 4 shows cross sectional view of a second detail of the airfield light

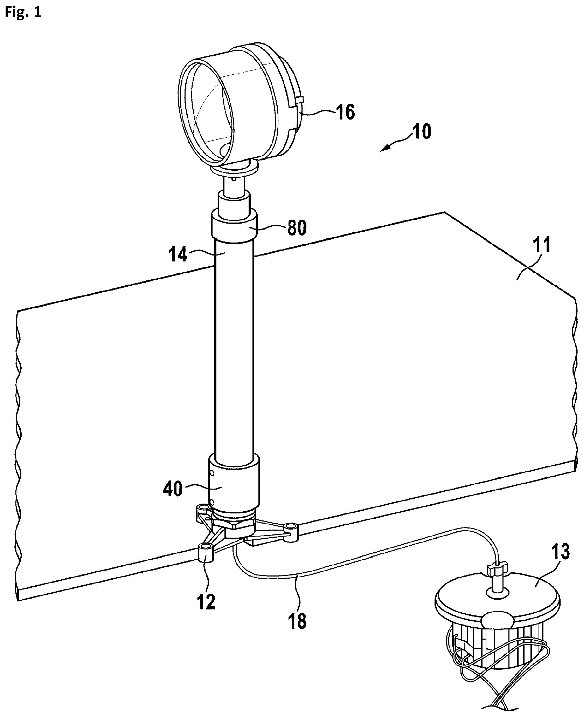

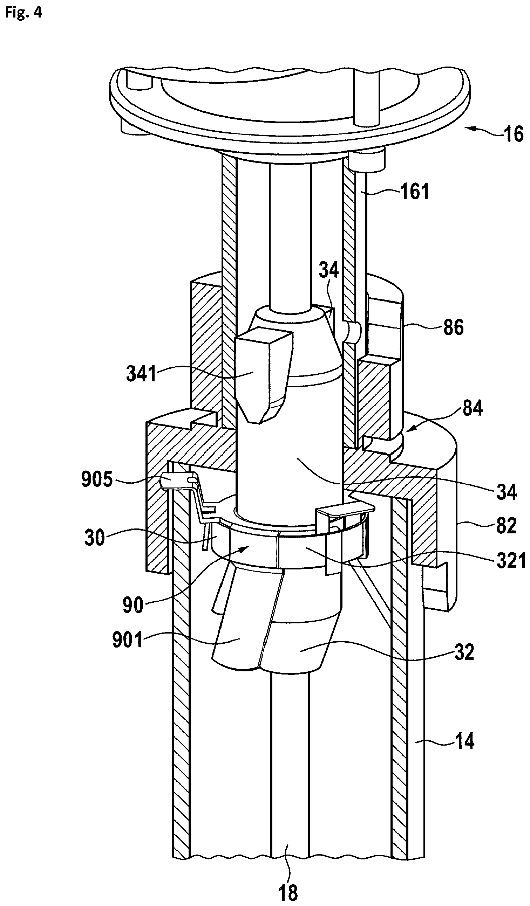

In figure 1 an embodiment of an airfield light 10 is shown. The airfield light 10 has a base 12 being positioned on a ground 11. The base 12 supports a first mounting sleeve 40 and the first mounting sleeve 40 supports an upright mounting post 14. The mounting post 14 is not necessarily upright, but can be inclined, against the vertical or even horizontal, if required (the directions refer to the mounting post's longitudinal axis). On top of the mounting post 14 is a second mounting sleeve 80, which supports a lighting fixture 16. A power supply 13 may be connected to a controlling station and electrically connect the lighting fixture 16 via a cable 18. The cable 18 may extend via a through hole of the base 12, via through holes of the first mounting sleeve 40, the mounting post 14 and the second mounting sleeve 80 into an opening of the lighting fixture 16 (see Fig. 4).

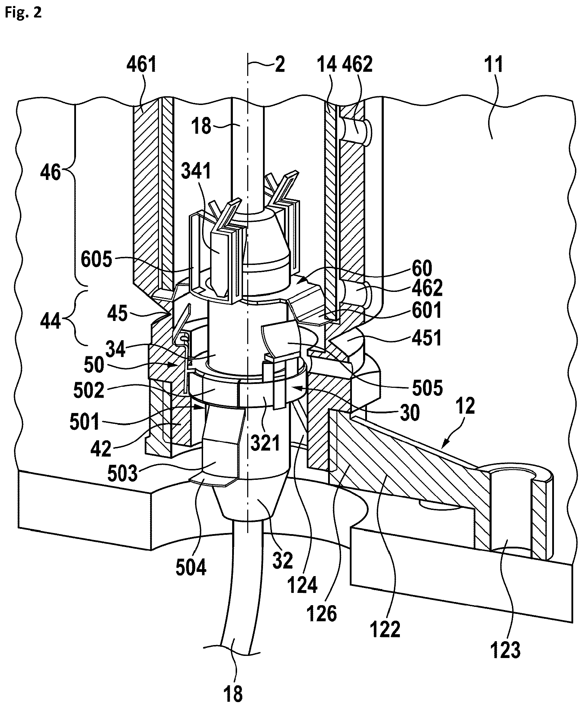

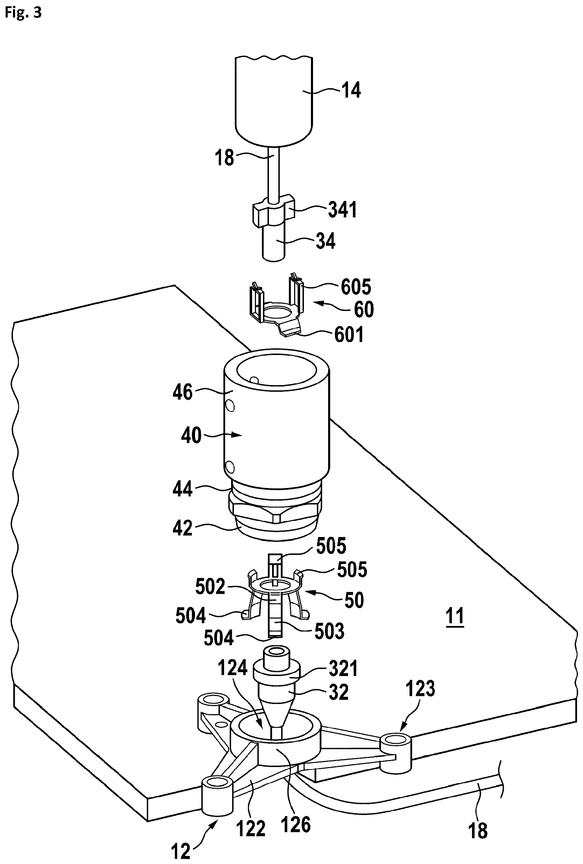

Figure 2 shows a cross sectional view of the bottom portion of the airfield light 10. The base 12 may have a through hole 124 which as depicted may be provided by a ring 126 (see as well Fig. 3). The through hole 124 may be centered relative to the contour of the base 12 and may enable to insert the cable 18 from the below into the airfield light 10. Alternatively, a cable could be inserted via a hole in a side wall side of the base 12. Attached to the ring 126 are a number of support arms 122 (preferably three or more) extending radially (within ±30°, preferably within ± 15° or less) with respect to the longitudinal axis 2 of the mounting post 14 and as well of the mounting sleeves 40, 80. The support arms 122 are preferably evenly spaced around the ring and may have bolt holes 123 or other means of fixation configured to secure the base 12 and thus the airfield light 10 to the ground 11. The support arms 122 could be replaced by other support means, e.g. by a support plate or support beams.

The base 12 provides the bottom portion of a half coupling for coupling a first (half-)coupling 42 (as indicated above, we will use the term coupling, only) of the first mounting sleeve 40 to the base 12. The first coupling 42, thus provides for a mechanical connection of the first mounting sleeve 40 to the base 12. In this example, the first coupling 42 has a thread that is connected to a complementary thread of the ring 126. The first coupling 42 has a hexagon head enabling to tighten and loosen the first coupling 42 e.g. using a wrench. Other head forms providing a positive locking (e.g. triangular, rectangular, pentagon, octagon, oval, etc.) may be used as well. Alternatively, the head may have a circular top view, in the latter case a gripper providing a friction locking connection can be used to tighten the coupling 42.

On top of the first coupling 42 is an intermediate portion 44. The intermediate portion 44 has a frangible area 45. The frangible area 45 is a portion of the mounting sleeve 40, which has compared to the first coupling portion 42 and a second coupling portion 46 a reduced stability against side loading. Thus, in case the airfield light 10 is subjected to a side load, the frangible area breaks and the base 12 and the mounting post 14 of the airfield light 10 remain unaffected, i.e. can be used again after replacement of the broken mounting sleeve 40.

The frangible area 45 can be realized in many ways, a very economic one is depicted: The frangible area 45 has a portion with a reduced wall thickness of the mounting sleeve 40. In this particular example, the mounting sleeve has a ring notch 451 and/or a ring groove 451 in its outer peripheral surface. In this example the cross section of the ring notch 451 has a triangular shape, but other contours are as well possible, e.g. quadratic, rectangular (cf. Fig. 4), rounded, semicircular, to name only a few.

On top of the intermediate portion 44 is the second coupling 46, being configured to support the mounting post 14. For example, the second coupling 46 may comprise an opening for receiving the lower end of the mounting post 14. The mounting post 14 may be secured against removal and/or rotation by at least one of positive-locking and friction-locking connection. For example, the second coupling may have a coaxial side wall 461 enclosing the mounting post 14. The side wall 461 may have at least one threaded hole 462 enabling to fixate the mounting post 14 in a predefined position by tightening a screw engaging into the threaded hole 462. Other locking techniques may be used as well, e.g. bayonet fitting, guiding slots, wedges and the like.

The cable 18 passes from the base 12 into the mounting sleeve 14 and from there through the mounting post 14. The cable 18 has a plug-socket connector 30 being positioned inside the mounting sleeve 40. As usual the plug-socket connector 30 has a first portion 32, e.g. a socket-connector, and second portion 34, e.g. the corresponding plug-connector (or vice versa).

At least one of the first and second portions 32, 34 may have a protrusion (or a recess) as support for ring or a ring segment of a optional holder 50, 60. Like in the depicted example, the first portion 32 may have a ring 321 supporting the optional first holder 50 and the second portion may have at least one (depicted example: two) protrusions 341 supporting the optional second holder 60. The second holder has elastic arms 605 extending from the ring of the second holder 60, which arms attach to the protrusion 341.

The first holder 50 as well as the second holder 60 may each have a ring encircling the first portion 32 or the second portion 34, respectively. The ring could as well be one or more ring segments. Attached to the ring of the first holder 50 are a number *n* of preferably evenly spaced legs 501. The depicted example has three legs 501, but any positive integer number n (n≥1) of legs 501 is possible. The at least one leg 501 has a first section 502 extending parallel to the longitudinal axis 2. Attached to the distal end of the first section is a second section engaging behind the support 321. Thus, the ring and the leg 501 and thus the first holder 50 are or is, respectively, axially secured to the first portion 32. From the distal end of the second section extends a third section 503 having a radially extending end portion 504. The end portion 504 engages below the end face of the mounting sleeve 40. The holder 50 thus secures the plug-socket connector 30 against being pulled upwards.

Similarly, the second holder 60 may have legs 601 securing the second holder 60 against being pulled towards the base 12. For example, the second holder 60 may have legs 601 engaging between a bottom of the second coupling 34 and the bottom of the mounting sleeve 14. Other attachment techniques to secure the second holder 60 relative to the second coupling 44 can be used as well. The result of securing the first holder 50 to the first portion 32 and the second holder 60 to the second portion 34 is that in case the frangible portion 44, 45 breaks, the electrical connector 30 separates into the plug connector and the socket connector, because the two portions of the plug-socket connector 30 are moved way from each other in case the mounting sleeve breaks. The electrical connection is thus safely interrupted and the cable 18 is protected from breaking, there are no free ends of wires that could harm any person.

The underlying idea can thus be summarized as attaching the first portion 32 to the first coupling 42 and the second portion to the second coupling 46. To obtain the effect of disconnecting the first and second portions 32, 34 of the plug-socket connector 30 it is sufficient to transfer axial forces in the direction away from the complementary portion of the plug-socket connector 30 from the first or second coupling 42, 46 to the respective first or second portion 32, 34 of the plug-socket connector 30.

As depicted, it is advantageous if the connection between the first coupling 42 and the first portion 32 of the connector 30 is elastic and configured to enable a pivotal movement of the portion 32 relative to the longitudinal axis 2 of the first coupling 42. Similarly, the connection between the second portion 34 of the connector 30 is preferably elastic and configured to enable a pivotal movement of the second portion 34 relative to the longitudinal axis 2 of the second coupling 46. It is noted, the longitudinal axes of the first and second couplings are aligned (parallel) only prior to breaking of the frangible area. When the frangible area breaks, the elastic support of the first and second portions 32, 34 relative to their respective first and second couplings 42, 46 enhances safe disconnection of the plug-socket connector 30. The holders 50, 60 are examples of support means providing for an axial support of the first connector 32 to the first coupling 43 and second connector 34 to the second coupling 46, respectively, which support means enable said pivotal movement.

As depicted, at least one of the optional holders 50, 60 may optionally comprise at least one second leg 505, being preferably elastic and configured to engage into a recess or behind a surface of the inner surface of the mounting sleeve 40. The second leg(s) 505 simplify assembly of the airfield light 10 and secure the lower portion 32 (first portion 32) of the connector 30 against falling through the through hole 124.

Fig. 4 shows another detail of the airfield light 10, namely the connection between the mounting post 14 and the lighting fixture 16. The mounting post 14 and the lighting fixture 16 are coupled by another mounting sleeve 80. Similar to the mounting sleeve 40 being explained above with reference to Fig. 2 and 3, the second mounting sleeve 80 has a first coupling 82 below a frangible area 84 and a second coupling 86 on top of the frangible area 84. The mounting post 14 is inserted from below into the first coupling 82 of the mounting sleeve 80 and can be secured as explained above with respect to the mounting sleeve 40. The lighting fixture 16 has a mounting pole extending into the second coupling 86.

The cable 18 extends from the mounting post 14 via the mounting sleeve 80 into the lighting fixture 16. The cable 18 has a second plug-socket connector 30 again having a first portion 32 and a second portion 34. An optional holder 90 may be attached to a plug socket connector 30 (in more detail: to its first portion 32), securing the plug-socket connector 30 to extend over the frangible area 84. In case the frangible area fails, e.g. due to an impact of the lighting fixture with an aircraft wing, the first (i.e. bottom) portion 32 of the plug-socket connector 32 remains in position, thus the end of the cable 18 inside and below the mounting post 14 remains unaffected and does not need to be replaced.

As can be seen in Fig. 4 and Fig. 2 the holders 50 and 90 may have elastic legs 501, 901 enabling the plug-socket connector 30 to pivot relative to the longitudinal axis 2, thereby assisting a disconnection of the plug-socket connector 30.

### List of reference numerals

- 2: longitudinal axis
- 10: airfield light
- 11: ground
- 12: base
- 122: support arm
- 124: base's through hole
- 126: ring of base
- 14: mounting post
- 16: lighting fixture
- 18: cable
- 30: plug-socket connector
- 32: first portion of plug-socket connector 30
- 321: support for holder 50
- 34: second portion of plug-socket connector 30
- 341: support for holder 60
- 40: mounting sleeve
- 42: first coupling
- 44: intermediate portion
- 45: frangible area
- 451: ring notch
- 46: second coupling
- 461: side wall
- 462: threaded hole
- 45: frangible area
- 50: first holder
- 501: (first) leg of holder
- 502: first section of leg 501
- 503: second section of leg 502
- 505: (second) leg of holder
- 60: second holder
- 601: (first) leg of holder
- 605: elastic arms configured to attach to second portion of the plug-socket connector 30
- 80: (second) mounting sleeve
- 90: (third) holder
- 901: (first) leg of (third) holder 90
- 905: (second) leg of (third) holder 90

## Claims

1. A mounting sleeve (40, 80) for mounting a post mount airfield light (10) to a base (12), wherein the mounting sleeve (40, 80) has longitudinal axis, a through hole extending along the longitudinal axis with a first opening being defined by a first end face of the mounting sleeve and second end being defined by a second end face of the mounting sleeve, and wherein the mounting sleeve (40, 80) comprises:
- a first coupling (42, 82) configured to be mounted to an airfield light base (12) or an upper end of a mounting post (14) of an airfield light (10) and
- a second coupling (46, 86) being configured to support a lower end of the mounting post (14) of the airfield light (10) or a lower end of an airfield lighting fixture (16) of the airfield light (10),
**characterized in, that**
the mounting sleeve (40, 80) has an intermediate portion (44, 84) between the first coupling (42, 82) and the second coupling (46, 86),
the intermediate portion (44, 84) has a frangible area configured to break prior to the other portions of the mounting sleeve (40, 80) thereby defining a predetermined weak link which breaks in case the airfield light is hit by an aircraft or any other vehicle to thereby disconnect the first coupling (42, 82) and the second coupling (82).

2. The mounting sleeve (40, 80) of claim 1, **characterized in that**
the mounting sleeve (40, 80) has peripheral surface, and
the peripheral surface has a ring groove (451) to thereby provide an area of reduced a wall thickness, which provides the weak link.

3. The mounting sleeve (40, 80) of one of the preceding claims, **characterized in that**
the through hole has
a first lower section with a first inner diameter,
a second section with a second inner diameter, wherein the second section is adjacent to the first section and wherein the second inner diameter is greater than the first inner diameter, to thereby provide a surface with a radial component configured to provide an abutment for restricting an axial movement of a first portion of an electrical plug-socket connector (30) towards the first end face.

4. The mounting sleeve (40, 80) of one of the preceding claims, **characterized in that**
the mounting sleeve provides an abutment for restricting an axial movement of a or the, respectively first portion of an or the, respectively, electrical plug-socket connector towards the second opening.

5. The mounting sleeve (40, 80) of one of the preceding claims, **characterized in that**
the second coupling provides an axial abutment configured to restrict an axial movement of a second portion of an or the, respectively electrical plug-socket connector towards the first end.

6. A holder (50, 60) for axially positioning a first portion (30) of a plug-socket connector (30) inside the mounting sleeve (40, 80) of one of the preceding claims, **characterized in that**
- the holder has a ring or a ring segment configured for at least partially encircling a longitudinal axis (2) of the plug-socket connector 30 and to transfer an axial force to the first portion (32) of the plug-socket connector (30), wherein the axial force points away from an end face of the first portion (32) being configured to mate with a complementary second portion (34) of the plug-socket connector (30),
- at least one first leg (501, 505) is attached to the ring, wherein the first leg (501, 505) has a land being configured to engage into a recess of the inner surface of the mounting sleeve (40, 80) or behind an end face of the mounting sleeve (40,80), to thereby block an axial movement of the first portion (32) of the plug-socket connector (30) at least in the direction of its complementary second portion (30).

7. The holder (50, 60) of claim 6, **characterized in that**,
- the ring or ring segment, respectively, is further configured to transfer an axial fore pointing towards the end face configured for mating with the second portion (34), and **in that**
- at least one second leg (505) is attached to the ring or ring segment, respectively, which second leg has a detent for engaging be the surface with a radial component of claim 3.

8. A kit, **characterized in that** comprises at least one mounting sleeve of one of claims 1 to 5 and at least one holder of claims 6 and 7.

9. The kit of claim 8, **characterized in that** it further comprises at least one first and/or second portion (32, 34) of the electrical plug-socket connector (30).

10. An airfield light comprising a base (12) for being mounted to the ground (11), a mounting post (14) being supported by the base (12), a lighting fixture (16) being supported by the mounting post (14) and a cable (18) for connecting the lighting fixture (16) to a power supply (13), **characterized in that** it further comprises,
- at least a first mounting sleeve (40, 80) of one of claims 1 to 5, wherein the first coupling (42) of the first mounting sleeve (40) is coupled to the base (12) and the second coupling (46) of the first mounting sleeve (40) is coupled to the mounting post (14) and/or
- at least a second mounting sleeve (80) of one of claims 1 to 5, wherein the first coupling (42) of the second mounting sleeve (80) is coupled to the mounting post (14) and the second coupling (46) is coupled to the lighting fixture (16).

11. The airfield light of claim 10, **characterized in that**
- the cable (18) has a first or/and a second plug-socket connector (30), wherein the plug-socket connector/s (30) has/each have a first and a second portion (32, 34) configured to mate to thereby connect two ends of the cable (18) extending through the mounting post (14) and at least one of the first and second mounting sleeves (40, 80),
- the plug-socket connector/s (30) is/ are each axially positioned inside the respective mounting sleeve/s (40/80),
- a holder of one of claims 6 or 7 and the first or/and second portion/s (32, 34) of the plug-socket connector/s () is/are axially positioned inside at least one of the first or second mounting sleeve (40, 80), wherein holder (50, 60) positions the plug-socket connector at the axial position of the weak link.

12. The airfield light of claim 11, **characterized in that**
- a first holder (50, 90) attaches the first portion (32) of the respective plug-socket connector (30) to the first coupling (42, 82) of the coupling sleeve (40, 80) and/or
- a second holder (60) attaches the second portion (34) of the respective plug-socket connector (30) to the second coupling (46, 86) of the coupling sleeve (40, 80).

13. The airfield light of claim 11 or 12, **characterized in that**
the first or/and second holder/s (50, 60, 90) pivotable support/s the first or/and second plug-socket connector (30), respectively.

## Amended claims

### Amended claims in accordance with Rule 137(2) EPC.

1. A mounting sleeve (40, 80) for mounting a post mount airfield light (10) to a base (12), wherein the mounting sleeve (40, 80) has longitudinal axis, a through hole extending along the longitudinal axis with a first opening being defined by a first end face of the mounting sleeve and second opening being defined by a second end face of the mounting sleeve, and wherein the mounting sleeve (40, 80) comprises:
- a first coupling (42, 82) configured to be mounted to an airfield light base (12) or an upper end of a mounting post (14) of an airfield light (10) and
- a second coupling (46, 86) being configured to support a lower end of the mounting post (14) of the airfield light (10) or a lower end of an airfield lighting fixture (16) of the airfield light (10),
the mounting sleeve (40, 80) has an intermediate portion (44, 84) between the first coupling (42, 82) and the second coupling (46, 86),
the intermediate portion (44, 84) has a frangible area configured to break prior to the other portions of the mounting sleeve (40, 80) thereby defining a predetermined weak link which breaks in case the airfield light is hit by an aircraft or any other vehicle to thereby disconnect the first coupling (42, 82) and the second coupling (46, 86),
**characterized in, that**
the mounting sleeve (40, 80) provides an abutment for restricting an axial movement of a or the, respectively first portion (32) of an or the, respectively, electrical plug-socket connector (30) towards the second opening.

2. The mounting sleeve (40, 80) of claim 1, **characterized in that**
the mounting sleeve (40, 80) has peripheral surface, and
the peripheral surface has a ring groove (451) to thereby provide an area of reduced a wall thickness, which provides the weak link.

3. The mounting sleeve (40, 80) of one of the preceding claims, **characterized in that**
the through hole has
a first lower section with a first inner diameter,
a second section with a second inner diameter, wherein the second section is adjacent to the first section and wherein the second inner diameter is greater than the first inner diameter, to thereby provide a surface with a radial component configured to provide an abutment for restricting an axial movement of a first portion (32) of an electrical plug-socket connector (30) towards the first end face.

4. The mounting sleeve (40, 80) of one of the preceding claims, **characterized in that**
the second coupling (46, 86) provides an axial abutment configured to restrict an axial movement of a second portion of and/or the, respectively electrical plug-socket connector (30) towards the first end.

5. A holder (50, 60) for axially positioning a first portion (32) of a plug-socket connector (30) inside the mounting sleeve (40, 80) of one of the preceding claims, **characterized in that**
- the holder (50, 60) has a ring or a ring segment configured for at least partially encircling a longitudinal axis (2) of the plug-socket connector (30) and to transfer an axial force to the first portion (32) of the plug-socket connector (30), wherein the axial force points away from an end face of the first portion (32) being configured to mate with a complementary second portion (34) of the plug-socket connector (30),
- at least one first leg (501, 505) is attached to the ring, wherein the first leg (501, 505) has a land being configured to engage into a recess of the inner surface of the mounting sleeve (40, 80) or behind an end face of the mounting sleeve (40,80), to thereby block an axial movement of the first portion (32) of the plug-socket connector (30) at least in the direction of its complementary second portion (34).

6. The holder (50, 60) of claim 5, **characterized in that**,
- the ring or ring segment, respectively, is further configured to transfer an axial foce pointing towards the end face configured for mating with the second portion (34), and **in that**
- at least one second leg (505) is attached to the ring or ring segment, respectively, which second leg (505)has a detent for engaging the surface with a radial component of claim 3.

7. A kit, **characterized in that** comprises at least one mounting sleeve (40, 80) of one of claims 1 to 4 and at least one holder of claims 6 and 7.

8. The kit of claim 7, **characterized in that** it further comprises at least one first and/or second portion (32, 34) of the electrical plug-socket connector (30).

9. An airfield light (10) comprising a base (12) for being mounted to the ground (11), a mounting post (14) being supported by the base (12), a lighting fixture (16) being supported by the mounting post (14) and a cable (18) for connecting the lighting fixture (16) to a power supply (13), **characterized in that** it further comprises,
- at least a first mounting sleeve (40, 80) of one of claims 1 to 4, wherein the first coupling (42) of the first mounting sleeve (40) is coupled to the base (12) and the second coupling (46) of the first mounting sleeve (40) is coupled to the mounting post (14) and/or
- at least a second mounting sleeve (80) of one of claims 1 to 4, wherein the first coupling (42) of the second mounting sleeve (80) is coupled to the mounting post (14) and the second coupling (46) is coupled to the lighting fixture (16).

10. The airfield light (10) of claim 9, **characterized in that**
- the cable (18) has a first or/and a second plug-socket connector (30), wherein the plug-socket connector/s (30) has/each have a first and a second portion (32, 34) configured to mate to thereby connect two ends of the cable (18) extending through the mounting post (14) and at least one of the first and second mounting sleeves (40, 80),
- the plug-socket connector/s (30) is/ are each axially positioned inside the respective mounting sleeve/s (40/80),
- a holder (50, 60) of one of claims 5 or 6 and the first or/and second portion/s (32, 34) of the plug-socket connector/s (30) is/are axially positioned inside at least one of the first or second mounting sleeve (40, 80), wherein holder (50, 60) positions the plug-socket connector (30) at the axial position of the weak link.

11. The airfield light (10) of claim 10, **characterized in that**
- a first holder (50, 90) attaches the first portion (32) of the respective plug-socket connector (30) to the first coupling (42, 82) of the mounting sleeve (40, 80) and/or
- a second holder (60) attaches the second portion (34) of the respective plug-socket connector (30) to the second coupling (46, 86) of the mounting sleeve (40, 80).

12. The airfield light of claim 10 or 11, **characterized in that**
the first or/and second holder/s (50, 60, 90) pivotable support/s the first or/and second plug-socket connector (30), respectively.
